# EUROPÄISCHE PATENTSCHRIFT

(11) **EP 1 917 461 B1**
(45) Veröffentlichungstag und Bekanntmachung des Hinweises auf die Patenterteilung: **16.03.2011**
(21) Anmeldenummer: 06776799.6
(22) Anmeldetag: 11.08.2006
(51) Int. Cl.: F16H 61/02

(54) **VOPRRICHTUNG ZUR VORAUSSCHAUENDEN BESTIMMUNG VON ÜBERSETZUNGSÄNDERUNGEN BEI AUTOMATISCHEN GETRIEBEN**
DEVICE FOR PREDICTIVELY DETERMINING MULTIPLICATION CHANGES IN AUTOMATIC TRANSMISSIONS
DISPOSITIF DE DETERMINATION PREVISIONNELLE DE CHANGEMENTS DE DEMULTIPLICATION DANS DES BOITES AUTOMATIQUES

(30) Priorität: 25.08.2005 DE 102005040179
(43) Veröffentlichungstag der Anmeldung: 07.05.2008
(73) Patentinhaber: ZF Friedrichshafen AG, 88038 Friedrichshafen (DE)
(72) Erfinder: FAKLER, Winfried, 88048 Friedrichshafen (DE); VOSS, Thomas, 88085 Langenargen (DE); DEISS, Harald, 88213 Ravensburg (DE)
(86) Internationale Anmeldenummer: PCT/EP2006/007983
(87) Internationale Veröffentlichungsnummer: WO 2007/022888

(56) Entgegenhaltungen:
- WO-A-00/01965
- WO-A-02/16806
- FR-A- 2 864 193

## Beschreibung

Die Erfindung betrifft ein System zur Steuerung von Übersetzungsänderungen in automatischen Getrieben entsprechend den Merkmalen des Oberbegriffs des Anspruchs 1, sowie einem Verfahren zur Steuerung der Übersetzungsänderung entsprechend dem Oberbegriff des Anspruchs 7.

Bei Kraftfahrzeugen mit automatischen Getrieben ist es bekannt, die Übersetzungsänderungen entsprechend der Betriebsparameter des Fahrzeugs durch elektronische Steuerungen bestimmen zu lassen. Neben den Fahrzeugdaten werden meist auch Fahrerdaten, welche beispielsweise den Fahrer wunsch wiedergeben, berücksichtigt. Zudem ist es bekannt, Umgebungsinfor mationen für die Bestimmung der Übersetzungsänderung einzubeziehen. Dafür können Informationen von landkartengestützten Navigationssystemen sowie Umgebungssensoren verwendet werden. Somit kann für die Bestimmung der Übersetzungsänderung die momentane wie auch die zukünftige Fahr bzw. Umweltsituation berücksichtigt werden.

Die DE 195 28 625 zeigt beispielsweise ein System zur Bestimmung der Übersetzungsänderung bei einem Automatgetriebe, bei dem die Übersetzungsänderungen in Abhängigkeit von Fahrer- bzw. Fahrzeugdaten sowie von Weginformationen bestimmt werden. Für die Bestimmung der Weginformationen wird ein an sich bekanntes landkartengestützes Navigationsmittel in das System zur Bestimmung der Übersetzungsänderung integriert. Das Navigationsmittel leitet dabei Weginformationen an eine Vorrichtung zur Bestimmung einer Adaptionsgröße weiter. Diese Adaptionsgröße wird dann an die adaptive Getriebesteuerung weitergeleitet. Unter der Berücksichtigung der Adaptionsgröße wird in der adaptiven Getriebesteuerung die Übersetzungsänderung bestimmt. Es wird also eine adaptive Getriebesteuerung so modifiziert, dass sie eingehende Weginformationen berücksichtigen kann.

Die FR 2864193 A1 die die Merkmale des Oberbegriffs des Anspruch 1 beinhaltet, offenbart ein System zur Überwachung von Gangwechseln eines Automatgetriebes, bei welchem ein durch ein erstes und zweites Modul vorgeschlagener Getriebegang durch ein drittes Modul korrigiert werden kann. Das dritte Modul ist mit einem Hilfsmittel zur Ansteuerung eines Gangwechselstellers verbunden.

Es ist Aufgabe der Erfindung, eine Vorrichtung zur vorausschauenden Bestimmung einer Übersetzungsänderung von automatischen Getrieben zu ermöglichen, welche besonders kostengünstig und einfach mit bekannten Getriebesteuerungen zu kombinieren sind.

Die Aufgabe wird durch ein System entsprechend den kennzeichnenden Merkmalen des Hauptanspruchs sowie ein Verfahren zur Steuerung des Systems entsprechend den kennzeichnenden Merkmalen des Anspruchs 7 gelöst.

Erfindungsgemäß wird ein System zur Steuerung von Übersetzungsänderungen in automatischen Getrieben für Kraftfahrzeuge vorgeschlagen, bei welchem eine elektronische Steuerung mit einer Vorrichtung zur Bestimmung von Fahrer- und Fahrzeugdaten verbunden ist. Die elektronische Steuerung bestimmt daraus einen ersten Übersetzungsvorschlag. Dieser erste Übersetzungsvorschlag wird an ein der elektronischen Steuerung nachgeschalteten Korrekturmodul weitergeleitet, welches den ersten Übersetzungsvorschlag entweder modifiziert bzw. korrigiert oder unverändert an das Getriebe weiterleitet. Das Korrekturmodul empfängt dafür neben Fahrzeug- und Fahrerdaten auch Umgebungsinformationen, welche beispielsweise durch landkartengestützte Navigationsmittel oder Umgebungssensoren bestimmt werden. Dabei können die Umgebungssensoren z.B. den Abstand zu einem vorausfahrenden Fahrzeug messen, elektronische Straßenschilder lesen oder auch Verkehrsfunkinformationen verarbeiten. Wird aus diesen Umgebungsinformationen die Notwendigkeit einer Änderung des ersten Übersetzungsvorschlages erkannt, wird der erste Übersetzungsvorschlag korrigiert und daraus ein zweiter Übersetzungsvorschlag berechnet. Wenn keine notwendige Änderung erkannt wird, wird der erste Übersetzungsvorschlag beibehalten und als zweiter Übersetzungsvorschlag vom Korrekturmodul ausgegeben. Der zweite Übersetzungsvorschlag wird an das Getriebe weitergeleitet.

Durch die erfindungsgemäße Vorrichtung ist es möglich, eine bekannte elektronische Steuerung vollkommen oder zumindest weitgehend unverändert zu verwenden und die Berücksichtigung der Umgebungsinformationen nachgeschaltet, in einem zweiten Schritt erst zu berücksichtigen. Somit ist es also möglich, in ein bestehendes System zur Bestimmung von Übersetzungsänderungen die Berücksichtigung von Umgebungsinformationen und dadurch die vorausschauende Bestimmung einer Fahrsituation auch nachträglich noch zu ermöglichen.

Das Korrekturmodul besteht dabei in einer ersten Ausgestaltung aus einer Vorrichtung zur vorausschauenden Bestimmung einer Fahrsituation sowie einer Vorrichtung zur Bestimmung des zweiten Übersetzungsvorschlags. Einer Fahrsituation entspricht eine erkannte vorausliegende Situation, wie beispielsweise eine Kurve, lange Gerade, Kreuzung, Steigung, Stadt-/Über-landfahrt oder ein vorausfahrendes Fahrzeug. Je nach erkannter Fahrsituation und der weiterhin eingehenden Fahrzeug-/Fahrerdaten wird dann in der Vorrichtung zur Bestimmung des korrigierten Übersetzungsvorschlags ein zweiter Übersetzungsvorschlag berechnet. Dabei kann dieser zweite Übersetzungsvorschlag je nach der erkannten Fahrsituation und den entsprechenden Fahrzeug-/Fahrerdaten dem ersten unveränderten Übersetzungsvorschlag oder einem modifizierten neuen Übersetzungsvorschlag entsprechen.

In einer weiteren Ausgestaltung beinhaltet das Korrekturmodul zudem eine Vorrichtung zur Bestimmung des Fahrerwunsches. Dabei wird ein erkannter Fahrerwunsch bei der Bestimmung des zweiten Übersetzungsvorschlags berücksichtigt.

In einer vorteilhaften Ausgestaltung kann die nachgeschaltete Berücksichtigung der Umgebungsinformationen auch übersprungen und der erste Übersetzungsvorschlag auch direkt an das Getriebe weitergeleitet werden. Erkennt die elektronische Steuerung beispielsweise eine Notsituaton oder eine Fehlfunktion des Korrekturmoduls, kann als Rückfalllösung der erste Übersetzungsvorschlag direkt an das Getriebe weitergeleitet werden.

Die einzelnen Module des erfindungsgemäßen Systems zur Bestimmung von Übersetzungsänderungen können direkt, wie beispielsweise über eine Bus-orientierte Verbindung, oder auch drahtlos miteinander verbunden sein.

Zur weiteren Verdeutlichung der Erfindung sowie dessen Ausführungsformen ist der Beschreibung eine Zeichnung beigefügt.
In dieser zeigt:
- Fig. 1: Prinzipdarstellung der Struktur des Systems;
- Fig. 2: Prinzipdarstellung des Aufbaus des Korrekturmoduls.

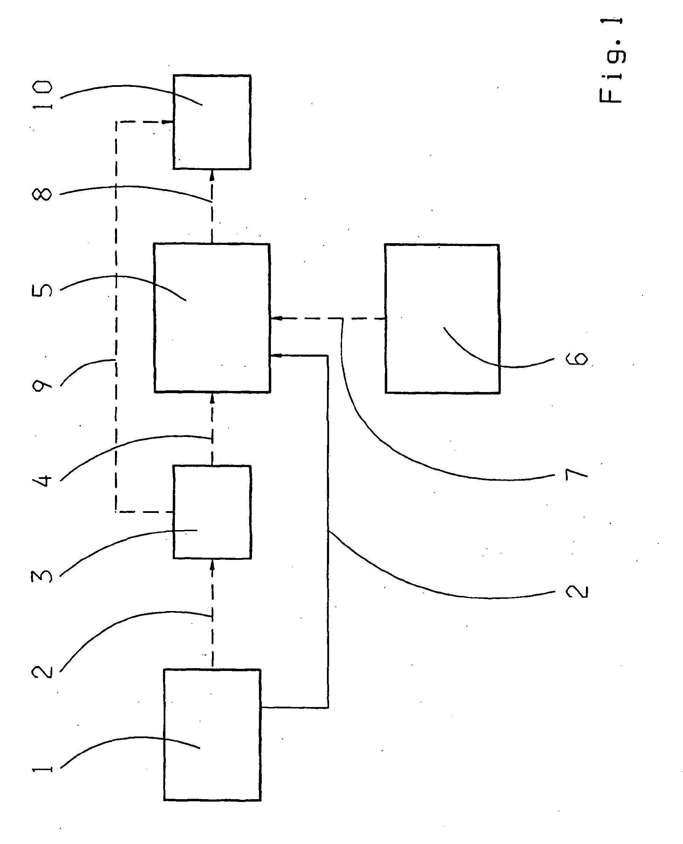

Fig. 1 stellt eine Darstellung der Struktur eines erfindungsgemäßen Systems dar. Dabei leitet eine Vorrichtung zur Erfassung von Fahrer- und/oder Fahrzeugdaten 1 die erkannten Fahrer- und/oder Fahrzeugdaten 2 an eine adaptive elektronische Getriebesteuerung 3 weiter. Fahrzeugdaten 2 sind beispielsweise der Drehzahlverlauf des Antriebs, die Stellung des Fahrpedals oder die Fahrzeuggeschwindigkeit. Weiterhin kann ein erkanntes Fahrverhalten eines Fahrers als Fahrerdaten 2 an die Getriebesteuerung 3 weitergeleitet werden. Die Getriebesteuerung 3 bestimmt daraus einen ersten Übersetzungsvorschlag 4. Dieser erste Übersetzungsvorschlag 4 wird dann an ein Vorausschau-oder Korrekturmodul 5 weitergegeben. In dieses Korrekturmodul 5 werden weiterhin von einer Vorrichtung zur Erfassung von Umgebungsinformationen 6 die erkannten Umgebungsinformationen 7 sowie Fahrer- und/oder Fahrzeugdaten 2 geleitet. Die Umgebungsinformationen 6 werden entweder durch landkartengestützte Navigationsmittel oder Umgebungssensoren erkannt. Aus den eingehenden Informationen bestimmt das Korrekturmodul 5 einen zweiten Übersetzungsvorschlag 8. Dieser kann in Abhängigkeit von den eingehenden Informationen entweder dem ersten Übersetzungsvorschlag 4, der nicht weiter modifiziert wird oder einem neuen, korrigierten Übersetzungsvorschlag entsprechen. Außerdem ist hier als Rückfalllösung eine direkte Verbindung 9 von der Getriebesteuerung 3 mit dem Getriebe 10 dargestellt. Erkennt die Getriebesteuerung 3 eine Fehlfunktion des Korrekturmoduls 5 oder eine andere Notsituation, kann der erste Übersetzungsvorschlag 4 auch direkt an das Getriebe 10 weitergeleitet werden. Schließlich ist es auch möglich, dass die elektronische Steuerung auch weitere Signale, wie beispielsweise ein Priorisierungssignal, an das Korrekturmodul 5 leitet

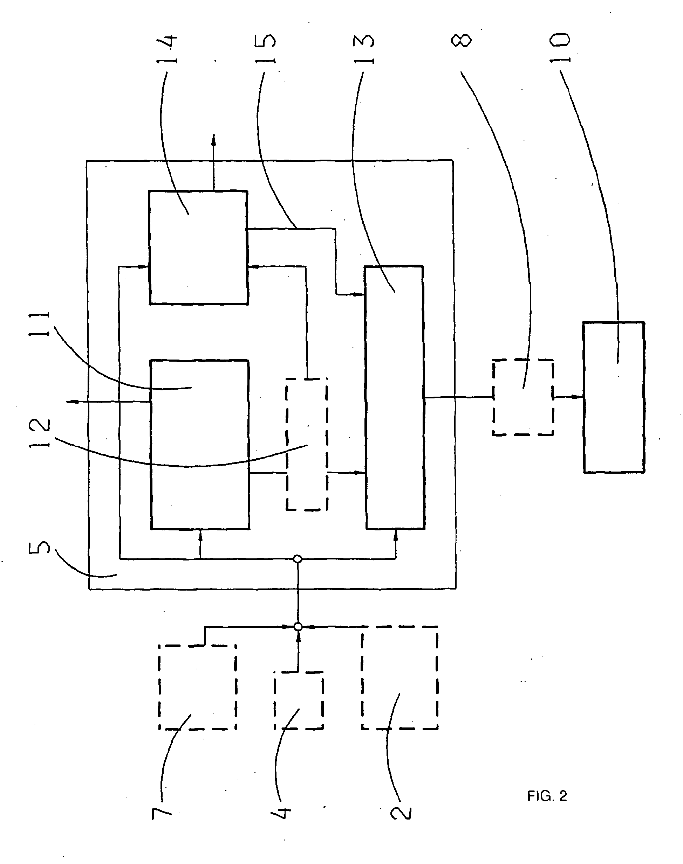

Fig. 2 zeigt einen möglichen Aufbau des Korrekturmoduls 5. An das Korrekturmodul 5 werden Daten über Umbebungsinformationen 7, den ersten Gangvorschlag 4 und Fahrer-und/oder Fahrzeugdaten 2 geleitet. Ein Fahrsituationsmodul 11 bestimmt aus den eingehenden Daten über die Umgebungsinformationen 7 eine aktuelle Fahrsituation 12. Diese Information 12 wird an das Bestimmungsmodul 13 weitergeleitet, in dem ein zweiter Übersetzungsvorschlag 8 bestimmt wird. An das Bestimmungsmodul 13 werden weiterhin zumindest die Fahrer- und/oder Fahrzeugdaten 2 übermittelt. Die Daten über die aktuelle Fahrsituation 12 werden zudem an ein optional vorhandenes Fahrerwunschmodul 14 geleitet, welches auch die Fahrer- und/oder Fahrzeugdaten erhält 2. Dort wird ein Fahrerwunsch 15 erkannt, welcher dann an das Bestimmungsmodul 13 weitergeleitet wird. Das Korrekturmodul 5 gibt dann zumindest einen zweiten Übersetzungsvorschlag 8 aus und kann optional auch Informationen über die aktuell erkannte Fahrsituation 12 beziehungsweise den Fahrerwunsch 15 ausgeben.

### Bezugszeichen

- 1: Vorrichtung zur Erfassung von Fahrer- und/oder Fahrzeugdaten
- 2: Fahrer- und/oder Fahrzeugdaten
- 3: elektronische Steuerung
- 4: erster Übersetzungsvorschlag
- 5: Korrekturmodul
- 6: Vorrichtung zur Erfassung von Umgebungsinformationen
- 7: Umgebungsinformationen
- 8: zweiter Übersetzungsvorschlag
- 9: Datenverbindung
- 10: Getriebe
- 11: Fahrsituationsmodul
- 12: Fahrsituation
- 13: Bestimmungsmodul
- 14: Fahrerwunschmodul
- 15: Fahrerwunsch

## Patentansprüche

1. Vorrichtung zur Bestimmung von Übersetzungsänderungen in automatischen Getrieben für Kraftfahrzeuge mit einer elektronischen Steuerung (3), einer Vorrichtung zur Erfassung von Umgebungsinformationen (6) und einer Vorrichtung zur Erfassung von Fahrer-/Fahrzeugdaten (1), wobei
- die elektronische Steuerung (3) über ein Korrekturmodul (5) mit dem Getriebe (10) verbunden ist, und das Korrekturmodul (5) weiterhin mit der Vorrichtung zur Erfassung von Umgebungsinformationen (6) sowie mit der Vorrichtung zur Erfassung von Fahrer- und/oder Fahrzeugdaten (1) verbunden ist, und das Korrekturmodul (5) mit dem Getriebe (10) verbunden ist und
- von der elektronischen Steuerung (3) ein erster Übersetzungsvorschlag (4) an das Korrekturmodul (5) zuführbar ist und an das Korrekturmodul (5) weiterhin Umgebungsinformationen (7) und Fahrer- und/oder Fahrzeugdaten (2) zuführbar sind und von dem Korrekturmodul (5) ein zweiter Übersetzungsvorschlag (8) an das Getriebe (10) weiterleitbar ist,
**dadurch gekennzeichnet, dass**
- das Korrekturmodul (5)
• aus einem Fahrsituationsmodul (11) zur Bestimmung einer vor ausliegenden Fahrsituation (12) aus den eingehenden Umgebungsinformationen (7) und
• einem Bestimmungsmodul (13) zur Bestimmung des zweiten Übersetzungsvorschlags (8) besteht und
• ein Fahrerwunschmodul (14) zur Erkennung eines Fahrerwunsches (15) enthält, welches mit dem Fahrsituationsmodul (11) und dem Bestimmungsmodul (13) verbunden ist.

2. Vorrichtung nach Anspruch 1, **dadurch gekennzeichnet. dass** die Umgebungsinformationen (7), der erste Übersetzungsvorschlag (4) sowie die Fahrer- und/oder Fahrzeugdaten (2) an das Korrekturmodul (5) weiterleitbar sind, von dem Fahrsituationsmodul (11) Daten über die vorausliegende und/oder aktuelle Fahrsituation (12) an das Bestimmungsmodul (13) und von dem Bestimmungsmodul (13) ein zweiter Übersetzungsvorschlag (8) an das Getriebe (10) weiterleitbar ist.

3. Vorrichtung nach Anspruch 1, **dadurch gekennzeichnet, dass** Daten über die vorausliegende und/oder aktuelle Fahrsituation (12) von dem Fahrsituationsmodul (11) an das Fahrerwunschmodul (14) weiterleitbar und von dem Fahrerwunschmodul (14) Daten betreffend den Fahrerwunsch (15) an das Bestimmungsmodul (13) weiterleitbar sind.

4. Vorrichtung nach einem der vorherigen Ansprüche, **dadurch gekennzeichnet, dass** bei einem erkannten Fehler die elektronische Getriebesteuerung auch direkt mit dem Getriebe (10) verbindbar ist.

5. Vorrichtung nach einem der vorherigen Ansprüche, **dadurch geken nzeichnet** , dass mindestens zwei der einzelnen Module (1, 3, 5, 6, 10, 11; 13, 14) über eine Bus-orientierte Verbindung verbunden sind.

6. Vorrichtung nach einem der Ansprüche 1 bis 4, **dadurch gekenn** - **zeichnet**, dass mindestens zwei der einzelnen Module (1, 3, 5, 6, 10,11, 13, 14) drahtlos, wie beispielsweise induktiv oder über Funk, miteinander ver bunden sind.

7. Verfahren zur Bestimmung von Übersetzungsänderungen in automatischen Getrieben für Kraftfahrzeuge mit Vorrichtungen entsprechend einem der vorhergehenden Ansprüche, **dadurch gekennzeichnet, dass** einer elektronischen Steuerung (3) Fahrer und/oder Fahrzeugdaten (2) zugeführt werden, in der elektronischen Steuerung (3) daraus ein erster Übersetzungsvorschlag (4) bestimmt wird, dieser erste Übersetzungsvorschlag (4) einem nachgeschalteten Korrekturmodul (5) zugeführt wird, das Korrekturmodul (5) zudem Daten über Umgebungsinformationen (7) und Fahrer- und/oder Fahrzeugdaten (2) erhält und von dem Korrekturmodul (5) je nach den eingehenden Daten der erste Übersetzungsvorschlag (4) entweder modifiziert oder beibehalten und daraus ein zweiter Übersetzungsvorschlag (8) gebildet wird und der zweite Übersetzungsvorschlag (8) an das Getriebe (10) weitergegeben wird.

8. Verfahren nach Anspruch 7, **dadurch gekennzeichnet, dass** in dem Fahrsituationsmodul (11) aus den eingehenden Umgebungsinformationen (7) eine vorausliegende Fahrsituation (12) ermittelt wird und an das Bestimmungsmodul (13) oder an Bestimmungs- und Fahrenwunschmodul (13, 12) weitergegeben wird.

9. Verfahren nach Anspruch 8, **dadurch gekennzeichnet, dass** im Bestimmungsmodul (13) in Abhängigkeit der erkannten Fahrsituation (12) ein zweiter Übersetzungsvorschlag (8) berechnet wird.

## Claims

1. Device for determining changes in transmission ratio in automatic transmissions for motor vehicles having an electronic controller (3), a device for detecting surroundings information (6) and a device for detecting driver/vehicle data (1), wherein
- the electronic controller (3) is connected to the transmission (10) via a correction module (5), and the correction module (5) is also connected to the device for detecting surroundings information (6) and to the device for detecting driver data and/or vehicle data (1), and the correction module (5) is connected to the transmission (10), and
- a first transmission ratio proposal (4) can be fed to the correction module (5) from the electronic controller (3), and in addition surroundings information (7) and driver data and/or vehicle data (2) can be fed to the correction module (5), and a second transmission ratio proposal (8) can be passed onto the transmission (10) from the correction module (5),
**characterized in that**
- the correction module (5)
• is composed of a driving situation module (11) for determining a driving situation (12) lying ahead from the incoming surroundings information (7), and
• of a determining module (13) for determining the second transmission ratio proposal (8), and contains
• a driver's request module (14) for detecting a driver's request (15), which driver's request module (14) is connected to the driving situation module (11) and to the determining module (13).

2. Device according to Claim 1, **characterized in that** the surroundings information (7), the first transmission ratio proposal (4) and the driver data and/or vehicle data (2) can be passed onto the correction module (5), data relating to the driving situation (12) lying ahead and/or the current driving situation (12) can be passed onto the determining module (13) from the driving situation module (11), and a second transmission ratio proposal (8) can be passed onto the transmission (10) from the determining module (13).

3. Device according to Claim 1, **characterized in that** data relating to the driving situation (12) lying ahead and/or the current driving situation (12) can be passed on from the driving situation module (11) to the driver's request module (14), and data relating to the driver's request (15) can be passed onto the determining module (13) from the driver's request module (14).

4. Device according to one of the preceding claims, **characterized in that** when a fault is detected the electronic transmission controller can also be connected directly to the transmission (10).

5. Device according to one of the preceding claims, **characterized in that** at least two of the individual modules (1, 3, 5, 6, 10, 11, 13, 14) are connected via a bus-oriented connection.

6. Device according to one of Claims 1 to 4, **characterized in that** at least two of the individual modules (1, 3, 5, 6, 10, 11, 13, 14) are connected to one another in a wireless fashion such as, for example, inductively or by radio.

7. Method for determining changes in transmission ratio in automatic transmissions for motor vehicles having devices corresponding to one of the preceding claims, **characterized in that** driver data and/or vehicle data (2) are fed to an electronic controller (3), a first transmission ratio proposal (4) is determined therefrom in the electronic controller (3), said first transmission ratio proposal (4) is fed to a correction module (5) connected downstream, the correction module (5) additionally receives data relating to surroundings information (7) and driver and/or vehicle data (2), and the first transmission ratio proposal (4) is either modified or retained by the correction module (5) depending on the incoming data, and a second transmission ratio proposal (8) is formed from said first transmission ratio proposal (4), and the second transmission ratio proposal (8) is passed onto the transmission (10).

8. Method according to Claim 7, **characterized in that** a driving situation (12) lying ahead is determined in the driving situation module (11) from the incoming surroundings information (7), and said driving situation (12) lying ahead is passed onto the determining module (13) or to the determining module (13) and the driver's request module (12).

9. Method according to Claim 8, **characterized in that** a second transmission ratio proposal (8) is calculated in the determining module (13) as a function of the detected driving situation (12).

## Revendications

1. Dispositif pour déterminer des changements de rapport de démultiplication dans des boîtes de vitesses automatiques pour véhicules automobiles comprenant une commande électronique (3), un dispositif pour détecter des informations d'environnement (6) et un dispositif pour détecter des données de conducteur/de véhicule (1),
- la commande électronique (3) étant reliée avec la boîte de vitesses (10) par le biais d'un module de correction (5) et le module de correction (5) étant en outre relié avec le dispositif pour détecter des informations d'environnement (6) ainsi qu'avec le dispositif pour détecter des données de conducteur et/ou de véhicule (1), et le module de correction (5) étant relié avec la boîte de vitesses (10) et
- une première proposition de rapport de démultiplication (4) pouvant être acheminée par la commande électronique (3) au module de correction (5) et des informations d'environnement (7) ainsi que des données de conducteur et/ou de véhicule (2) pouvant en outre être acheminées au module de correction (5) et une deuxième proposition de rapport de démultiplication (8) pouvant être transmise par le module de correction (5) à la boîte de vitesses (10),
**caractérisé en ce que**
- le module de correction (5)
*se compose d'un module de situation de conduite (11) destiné à déterminer une situation de conduite (12) à venir à partir des informations d'environnement (7) entrantes et
* d'un module de détermination (13) destiné à déterminer la deuxième proposition de rapport de démultiplication (8) et
* contient un module de souhait du conducteur (14) destiné à détecter un souhait du conducteur (15), lequel est relié avec le module de situation de conduite (11) et le module de détermination (13).

2. Dispositif selon la revendication 1, **caractérisé en ce que** les informations d'environnement (7), la première proposition de rapport de démultiplication (4) ainsi que les données de conducteur et/ou de véhicule (2) peuvent être transmises au module de correction (5), des données sur la situation de conduite (12) à venir et/ou actuelle peuvent être transmises du module de situation de conduite (11) au module de détermination (13) et une deuxième proposition de rapport de démultiplication (8) peut être transmise du module de détermination (13) à la boîte de vitesses (10).

3. Dispositif selon la revendication 1, **caractérisé en ce que** des données sur la situation de conduite (12) à venir et/ou actuelle peuvent être transmises du module de situation de conduite (11) au module de souhait du conducteur (14) et des données concernant le souhait du conducteur (15) peuvent être transmises du module de souhait du conducteur (14) au module de détermination (13).

4. Dispositif selon l'une des revendications précédentes, **caractérisé en ce qu'**en cas de détection d'un défaut, la commande électronique de boîte de vitesses peut également être reliée directement avec la boîte de vitesses (10).

5. Dispositif selon l'une des revendications précédentes, **caractérisé en ce qu'**au moins deux des modules individuels (1, 3, 5, 6, 10, 11, 13, 14) sont reliés par le biais d'une liaison de type bus.

6. Dispositif selon l'une des revendications 1 à 4, **caractérisé en ce qu'**au moins deux des modules individuels (1, 3, 5, 6, 10, 11, 13, 14) sont reliés entre eux sans fil, par exemple de manière inductive ou par liaison hertzienne.

7. Procédé pour déterminer des changements de rapport de démultiplication dans des boîtes de vitesses automatiques pour véhicules automobiles avec des dispositifs selon l'une des revendications précédentes, **caractérisé en ce que** des données de conducteur et/ou de véhicule (2) sont acheminées à une commande électronique (3), une première proposition de rapport de démultiplication (4) est déterminée à partir de celles-ci dans la commande électronique (3), cette première proposition de rapport de démultiplication (4) est acheminée à un module de correction (5) branché en aval, le module de correction (5) reçoit en plus des données sur des informations d'environnement (7) ainsi que des données de conducteur et/ou de véhicule (2) et, suivant les données entrantes, la première proposition de rapport de démultiplication (4) est modifiée ou conservée par le module de correction (5) et une deuxième proposition de rapport de démultiplication (8) est formée à partir de celles-ci et la deuxième proposition de rapport de démultiplication (8) est transmise à la boîte de vitesses (10).

8. Procédé selon la revendication 7, **caractérisé en ce qu'**une situation de conduite (12) à venir est déterminée dans le module de situation de conduite (11) à partir des informations d'environnement (7) entrantes et est transmise au module de détermination (13) ou au module de détermination et de souhait du conducteur (13, 14) .

9. Procédé selon la revendication 8, **caractérisé en ce qu'**une deuxième proposition de rapport de démultiplication (8) est calculée dans le module de détermination (13) en fonction de la situation de conduite (12) détectée.
